# EUROPEAN PATENT SPECIFICATION

(11) **EP 4 700 271 B1**
(45) Date of publication and mention of the grant of the patent: **13.05.2026**
(21) Application number: 25189096.8
(22) Date of filing: 11.07.2025
(51) Int. Cl.: F16M 11/04, F16M 11/08, F16M 11/10, F16M 11/38, F16M 11/20, G06F 1/16

(54) **DISPLAY STAND**
SCHAUSTÄNDER
PRÉSENTOIR

(30) Priority: 19.08.2024 CN 202422001654 U; 15.10.2024 CN 202422489056 U
(43) Date of publication of application: 25.02.2026
(73) Proprietor: Shenzhen DeOne Innovation Technology Co., Ltd, Shenzhen, Guangdong 518129 (CN)
(72) Inventor: LI, JIANLE, Shenzhen (CN); XU, JUN, Shenzhen (CN)
(74) Representative: Metida

(56) References cited:
- EP-A1- 4 339 735
- US-B1- 12 055 971
- TECHFULGOODIES: "NEW Domyfan S6 Triple Screen Monitor: The Ultimate Tool for Laptop Users", 29 June 2024 (2024-06-29), XP093336488, Retrieved from the Internet <URL:https://www.youtube.com/watch?v=WN8xbFMr1X4> [retrieved on 20251117]
- OSREVIEWS: "REVIEW: Siaviala S6 Dual Display Portable Monitor - Laptop Screen Extender - Highly Adjustable!", 23 July 2024 (2024-07-23), XP093336493, Retrieved from the Internet <URL:https://www.youtube.com/watch?v=kODVSIcwpSs> [retrieved on 20251117]
- ANONYMOUS: "Amazon.com: domyfan 15.6" Laptop Screen Extender, 120% sRGB FHD 1080P IPS Triple Portable Laptop Monitor Extender with Hub USB HDMI Plug-Play for Mac, Windows, Chrome, Android, Fits All Laptops : Electronics", 1 December 2024 (2024-12-01), XP093336571, Retrieved from the Internet <URL:https://web.archive.org/web/20241201090452/https://www.amazon.com/domyfan-Extender-Portable-Monitor-Plug-Play/dp/B0D3VD32C9> [retrieved on 20251117]

## Description

### FIELD

The present disclosure relates to electronic device peripherals, and in particular, to a display stand.

### BACKGROUND

In both work and daily life, it is common to see that people using laptops select external displays to be connected to the laptops due to the inconvenience caused by a small screen size, which hampers operations. A control over the external displays is mainly achieved through the laptop's projection function, enabling the external displays to duplicate or extend the content shown on the laptop's built-in display, which provide laptop users additional display workspace. This method is widely applied in industries such as finance, design, and competitive gaming, where multi-window application processing or multi-screen synchronized presentations are frequently required.

When assembling multiple external displays, stands are often necessary. However, the existing stands are typically fixed and do not allow for adjustments to an orientation or a position of the external displays. Moreover, the main body of these stands cannot be folded for storage, making it difficult to flexibly switch between usage modes in different scenarios and thus limiting their adaptability.

D1 (US 12055971 B1) discloses a display bracket including a base and a first support component. The base is used for placing a laptop. The first support component is located on one side of the base, and the first support component is capable of rotating along a transverse length direction of the base. A back of the first support component is provided with a fixing device for installing an extended screen. The extended screen can be installed on the first support component through the fixing device on the first support component, and the laptop can be placed on the base. When the extended screen is installed on the first support component, an extension of a display of the laptop can be realized without a need to install the extended screen on the laptop display, so as not to damage the laptop and greatly improve user experience.

D2 (EP 4339735) discloses a display device including a housing having a rectangular shape in plan view, a display having a screen surface exposed from a front face of the housing, and a stand disposed on a rear face of the housing and pivotable on a rotation axis at a center in a short-side direction of the housing, to open and close relative to the housing. The stand has a width in a long-side direction of the housing smaller than a width of the housing in the long-side direction.

D3 (XP Number: 93336488, URL: https://www.youtube.com/watch?v=WN8xbFMr1X4) discloses a New Domyfan S6 Triple Screen Monitor, in which a stand having multiple configurations to accommodate two additional screens is shown.

D4 (XP Number: 93336493, URL: https://www.voutube.com/watch?v=KODVSlcwpSs) discloses a Siaviala S6 Dual Display Portable Monitor - Laptop Screen Extender - Highly Adjustable, in which a stand having multiple configuration to accommodate two additional screens is shown.

D5 (XP Number: 93336571, URL: https//web.archive.org/web/20241201090452/ https://www.amazon.com/domyfan-Extender-Portable-Monitor-Plug-Play/dp/BOD3VD32C9) discloses a laptop screen extender having a stand can support two additional screens.

### SUMMARY

In order to solve shortcomings in existing technologies, the present disclosure is to provide a display stand, which not only can be unfolded to adjust an orientation or a position of an external display but also can be folded for storage.

A display stand provided by the present disclosure includes a base plate and a support structure connected to the base plate and configured to be switched between an unfolded state where the support structure is configured to horizontally or vertically support the display stand on a placement surface and a folded state where the support structure is folded onto the base plate. When the support structure is in the unfolded state and is in a horizontally placed state, the support structure is configured to support a bottom of a device to be expanded and the base plate is configured to abut against a back of the device to be expanded; at least one expansion assembly is movably connected to the base plate and configured to mount at least one expansion screen. When the support structure is in the unfolded state and is in a vertically placed state, the support structure is configured to rotate a preset angle relative to the horizontally placed state to support the base plate and the at least one expansion assembly, and the base plate and the at least one expansion assembly are configured to mount and support the at least one expansion screen.

Comparing with existing technologies, the display stand provided by the embodiments of the present disclosure has following beneficial effects: The support structure can be unfolded or folded relative to the base plate, enabling the display stand to be folded or unfolded. The support structure is designed to allow the display stand to be placed horizontally or vertically on a placement surface, giving the display stand the advantage of being able to change the orientation and position of the expansion screen, thus providing a better user experience. Furthermore, when the support structure is in a horizontal placement state, after unfolding, it is used to support the bottom of the device to be expanded or at least one electronic device. After the bottom plate is unfolded, the base plate is designed to lean against the back of the device to be expanded or at least one electronic device, enabling the display stand to stably support the electronic device. The base plate is further movably equipped with at least one expansion assembly, which is used to mount at least one expansion screen. The position of the expansion screen can be adjusted as the expansion assembly moves relative to the base plate, thereby meeting the needs of different users and/or different application scenarios. When the support structure is in a vertical placement state, it is rotated by a preset angle relative to the horizontal placement state to support the base plate and the expansion assembly. The base plate and the at least one expansion assembly are used to mount and support at least one expansion screen, enabling the display stand to achieve positional expansion of expansion screens in different orientations, further adapting to the needs of different users and enhancing the user experience.

### BRIEF DESCRIPTION OF THE DRAWINGS

To more clearly illustrate technical solutions in embodiments of the present disclosure, a brief introduction to accompanying drawings required in the description of the embodiments will be provided below. It is obvious that the accompanying drawings described below are merely some embodiments of the present disclosure. For those skilled in the art, without making creative efforts, other diagrams can also be obtained based on these attached diagrams.
FIG. 1 is a schematic diagram of a display stand according to a first embodiment of the present disclosure in a first usage state (a folded state);
FIG. 2 is a schematic diagram of the display stand of the first embodiment of the present disclosure in a second usage state (a horizontally placed state);
FIG. 3 is a schematic diagram showing the display stand provided in the first embodiment of the present disclosure in a third usage state (a vertically placed state);
FIG. 4 is an exploded view of a partial structure of the display stand provided in the first embodiment of the present disclosure;
FIG. 5 is a schematic diagram showing the display stand provided in the first embodiment of the present disclosure corresponding to FIG. 4 from another perspective;
FIG. 6 is a schematic diagram showing the display stand provided in the first embodiment of the present disclosure in the second usage state with a support frame retracted;
FIG. 7 is a schematic diagram showing the display stand provided in the first embodiment of the present disclosure corresponding to FIG. 2 from another perspective;
FIG. 8 is a schematic diagram showing the display stand provided in the first embodiment of the present disclosure in the second usage state with a device to be expanded and expansion screens placed horizontally thereon;
FIG. 9 is a schematic diagram showing the display stand provided in the first embodiment of the present disclosure corresponding to FIG. 8 from another perspective;
FIG. 10 is a schematic diagram showing horizontal assembly of the expansion screens on the display stand provided in the first embodiment of the present disclosure in the second usage state;
FIG. 11 is a schematic diagram showing the display stand provided in the first embodiment of the present disclosure corresponding to FIG. 10 from another perspective;
FIG. 12 is a schematic diagram showing vertical assembly of the device to be expanded and the expansion screen on the display stand provided in the first embodiment of the present disclosure in the second usage state;
FIG. 13 is a schematic diagram showing the display stand provided in the first embodiment of the present disclosure from another perspective corresponding to FIG. 12;
FIG. 14 is a schematic diagram of the display stand provided in the first embodiment of the present disclosure in the second usage state, wherein an auxiliary plate is connected to a mounting plate at an angle;
FIG. 15 is a schematic diagram of the display stand provided in the first embodiment of the present disclosure in the third usage state, wherein the extension screens are vertically spliced;
FIG. 16 is a schematic diagram of the display stand provided in the first embodiment of the present disclosure in the second usage state, wherein both the auxiliary plate and the mounting plate are in an unfolded state;
FIG. 17 is a schematic diagram of the display stand provided in the first embodiment of the present disclosure in the second usage state, wherein both the auxiliary plate and the mounting plate are in an folded and the expansion screens are vertically spliced;
FIG. 18 is a schematic diagram showing the display stand according to a second embodiment of the present disclosure in a first usage state (a folded state);
FIG. 19 is a schematic diagram of the display stand in the second embodiment of the present disclosure in the second usage state showing the bottom plate unfolded (that is, a horizontally placed state) and the support frame folded;
FIG. 20 is a schematic diagram of the display stand in the second embodiment of the present disclosure in the second usage state showing the support frame unfolded and the bottom plate folded (a horizontally placed state);
FIG. 21 is a schematic diagram showing the display stand provided in the second embodiment of the present disclosure in a third usage state (a vertically placed state);
FIG. 22 is an exploded view of the mounting plate of the display stand provided in the second embodiment of the present disclosure;
FIG. 23 is an exploded view of the bottom plate of the display stand provided in the second embodiment of the present disclosure;
FIG. 24 is a schematic diagram of the display stand provided in the second embodiment of the present disclosure corresponding to FIG. 23 from another perspective.

Reference numerals: 1, Base plate; 11, Sliding slot; 13, Second surface; 14, First surface; 15, Storage cavity; 16, lower part of the base plate; 17, First direction; 1a, Support structure; 2a, Expansion assembly; 2, Auxiliary plate; 21, First rotating shaft; 22, Slider; 3, Mounting plate; 32, Attraction part; 321, Mounting groove; 322, Magnetic block; 33, Plate body; 34, Cover body; 4, Support frame; 41, Second rotating shaft; 42, Supporting leg; 43, Side; 44, second rotation axis; 5, Side plate; 51, Third rotating shaft; 52, Storage slot; 53, first rotation axis; 6, Bottom plate; 61, Fourth rotating shaft; 62, shell; 621, Upper shell; 622, Circuit board; 623, Lower shell; 624, Opening; 65, Expansion interface; 66, resisting block; 67, Anti-slip pattern; 7, Expansion screen; 8, Device to be expanded.

### DETAILED DESCRIPTION

The following provides a further detailed description of this application in combination with the attached drawings.

Detailed description of the present disclosure is merely an interpretation of the present disclosure and is not a limitation of the present application. After reading this specification, those skilled in the art may make non-contributive modifications to the present embodiment as needed, but as long as they are within the scope of the claims of the present application, they are protected by patent laws.

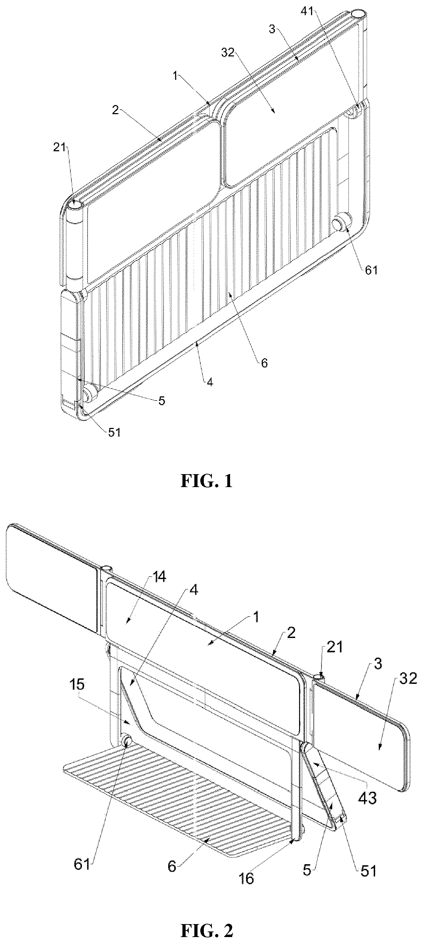

Specifically, please referring to FIGS. 1-24, a display stand by a first embodiment of the present disclosure includes a base plate 1 and a support structure 1a (which may include a bottom plate 6 and a support frame 4) connected to the base plate 1. The base plate 1 can be unfolded or folded relative to the support structure 1a, and the support structure 1a is configured to allow the display stand to be placed horizontally or vertically on a placement surface.

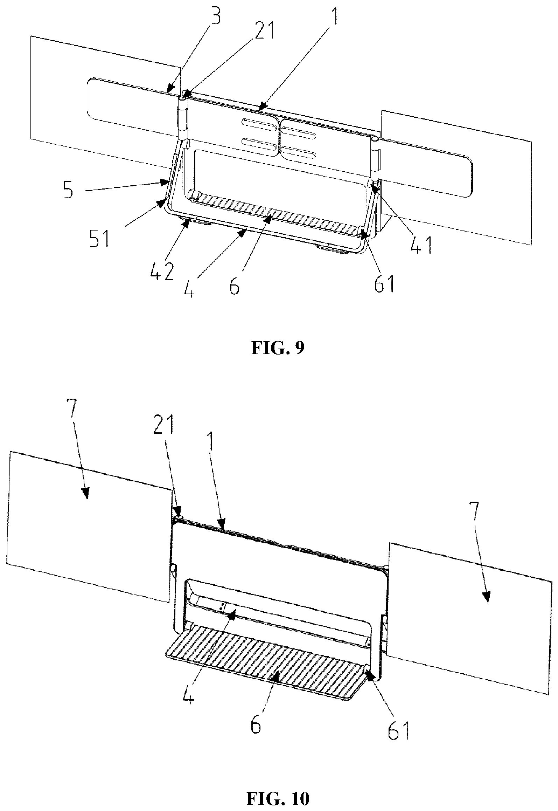

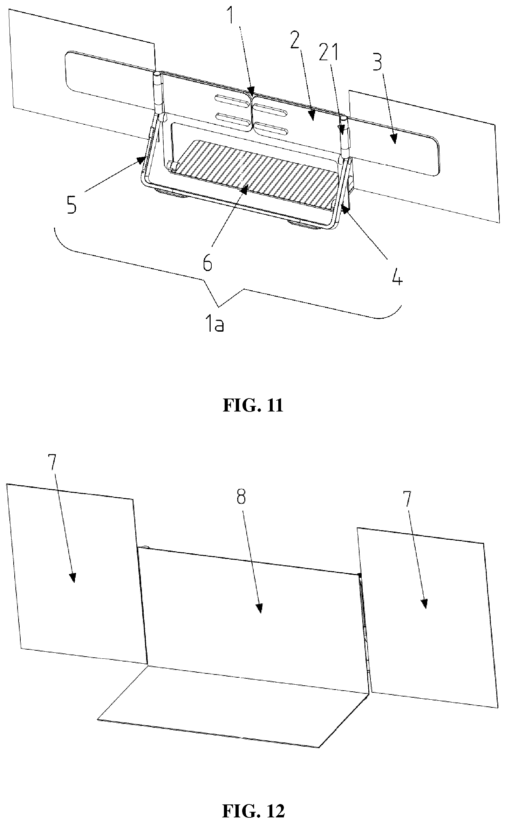

As illustrated in FIGS. 2, 6-14, 16, and 19, when the support structure 1a is in a horizontally placed state, after being unfolded, it is configured to support a bottom of a device to be expanded 8. After the bottom plate 6 is unfolded, the base plate 1 is configured to contact and support a back of the device to be expanded 8. At least one expansion assembly 2a (which may include an auxiliary plate 2 and a mounting plate 3) is movable arranged on the base plate 1. The at least one expansion assembly 2a is configured to mount at least one expansion screen 7. Additionally, when there is no need to support the device to be expanded 8, the display stand can be equipped with only the least one expansion screen 7, as shown in FIGS. 10 and 11.

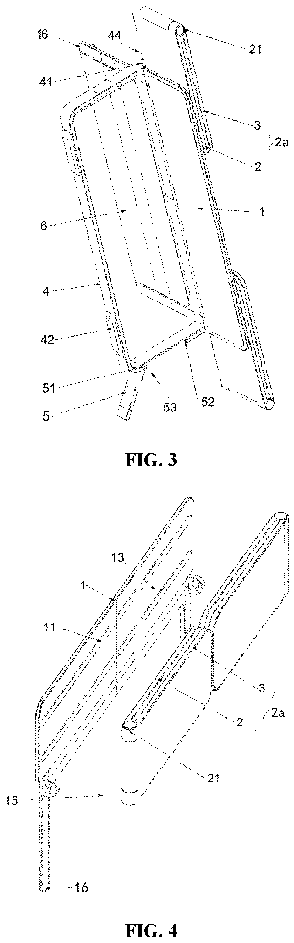

As shown in FIGS. 3, 15, and 21, when the support structure 1a is in a vertically placed state, it is rotated by a preset angle relative to the horizontally placed state to support the base plate 1 and the expansion assembly 2a. The base plate 1 and the at least one expansion assembly 2a are configured to mount and support the at least one expansion screen 7.

In this embodiment, the at least one expansion assembly 2a is slidably connected to the base plate 1, enabling the at least one expansion assembly 2a to extend a support length of the display stand along a preset direction. The preset direction may include, but not limited to, a horizontal direction and a vertical direction. Regardless of whether the display stand is in the horizontally or vertically placed state, the at least one expansion assembly 2a can extend the support length of the display stand, thereby facilitating the user's needs in different scenarios and improving user experience.

It can be understood that the at least one expansion assembly 2a includes two expansion assemblies 2a, which are respectively and movably connected to opposite sides of the base plate 1 and are configured to move in different directions.

Each expansion assembly 2a includes a connector movably connected to the base plate 1 and a mounting part movably connected to the connector and configured to mount the at least one expansion screen 7. The connector is configured to adjust the position of the expansion assembly 2a on the base plate 1 either horizontally or vertically, thereby adjusting a horizontal or vertical distance between the at least one expansion screen 7 mounted on the mounting part and the base plate 1.

In some embodiments, the connector is an auxiliary plate 2, and the mounting part is a mounting plate 3. It can be understood that in other embodiments, the connector can be other structures, as long as it can adjust the horizontal or vertical support length of the display stand. For example, in some embodiments, the connector can be a telescopic structure that can extend or retract relative to the base plate 1 to adjust the distance between the distal end of the telescopic structure away from the base plate 1 and the base plate 1. In some embodiments, the mounting plate 3 can be any other structure capable of mounting an expandable screen 7, such as a clamping member.

As shown in FIGS. 1, 3-5, 15, 17-18, and 20-21, the auxiliary plate 2 is movably connected to the base plate 1 so as to allow the auxiliary plate 2 to be switched between a first folded state and a first unfolded state relative to the base plate 1. In the first folded state, the auxiliary plate 2 is at least partially superimposed on the base plate 1. In the first unfolded state, the auxiliary plate 2 is at least partially away from the base plate 1. The base plate 1 has a first surface 14 configured to abut against the device to be expanded and a second surface 13 opposite to the first surface 14. The direction from the first surface 14 of the base plate 1 towards the second surface 13 is defined as the first direction 17. In the first folded state, projections of the auxiliary plate 2 and the base plate 1 on the first direction 17 at least partially overlap. In the first unfolded state, the projections of the auxiliary plate 2 and the base plate 1 on the first direction 17 are at least partially non-overlapping (i.e., not completely overlapping).

The mounting plate 3 is movably connected to the auxiliary plate 2 so as to allow the mounting plate 3 to be switched between a second folded state and a second unfolded state relative to the auxiliary plate 2. As shown in FIGS. 1, 3-5, 15, 17-18, and 20-21, in the second folded state, the mounting plate 3 is at least partially superimposed on the auxiliary plate 2, meaning that the projections of the mounting plate 3 and the auxiliary plate 2 on the first direction 17 at least partially overlap. As shown in FIGS. 2, 6-14, 16, and 19, in the second unfolded state, the mounting plate 3 is at least partially spaced apart from the auxiliary plate 2, meaning that the projections of the mounting plate 3 and the auxiliary plate 2 on the first direction 17 are at least partially non-overlapping.

Specifically, in the first embodiment, as shown in FIG. 1, the display stand is in both the first folded state and the second folded state. The connector here is specifically the auxiliary plate 2, and the number of auxiliary plates 2 is not limited; it can be one, two, three, or more. In this embodiment, there are two auxiliary plates 2, which can slide horizontally or vertically relative to the base plate 1. Specifically, the auxiliary plates 2 can slide horizontally relative to the base plate 1. The mounting part is the mounting plate 3, which is rotatably connected to one side of the auxiliary plate 2. When in the second folded state, the mounting plate 3 is configured to mount the expansion screen 7. Since the sliding distances of the two auxiliary plates 2 can be controlled independently, they can be adapted to accommodate and assemble two expansion screens 7 of different sizes for splicing. It should be noted that the base plate 1 has the first surface 14 and the second surface 13, and the auxiliary plates 2 are mounted on the second surface 13. In other embodiments, the connector can be a connecting rod.

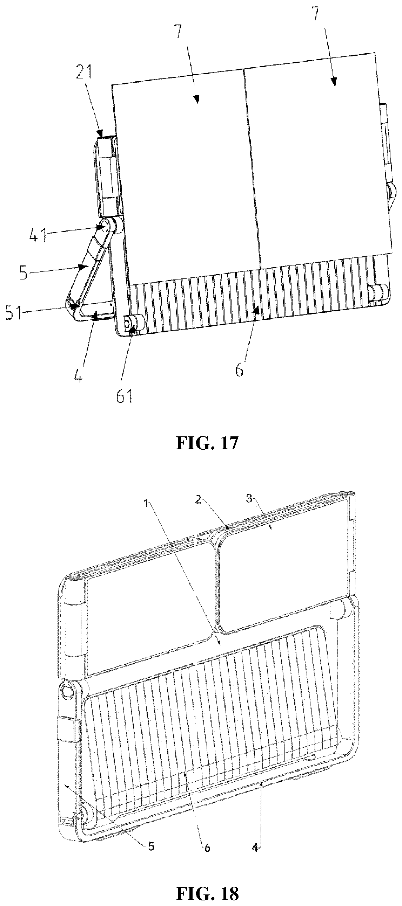

In the first usage scenario, as illustrated in FIG. 17, when the mounting plate 3 is in the second folded state and equipped with the expansion screen 7, the orientation of the expansion screen 7 is the same as or similar to that of the second surface 13 of the base plate 1. In this configuration, the display stand can achieve splicing of two expansion screens 7 on the left and right sides. Meanwhile, the display stand can be placed horizontally on a placement surface, such as the ground or a desktop, using supporting legs 42 arranged at the bottom of the display stand, thereby achieving a side-by-side multi-screen display. In other embodiments, a support frame can be mounted on the side of the display stand or on the second surface 13 of the base plate 1 to support the entire display stand on the placement surface.

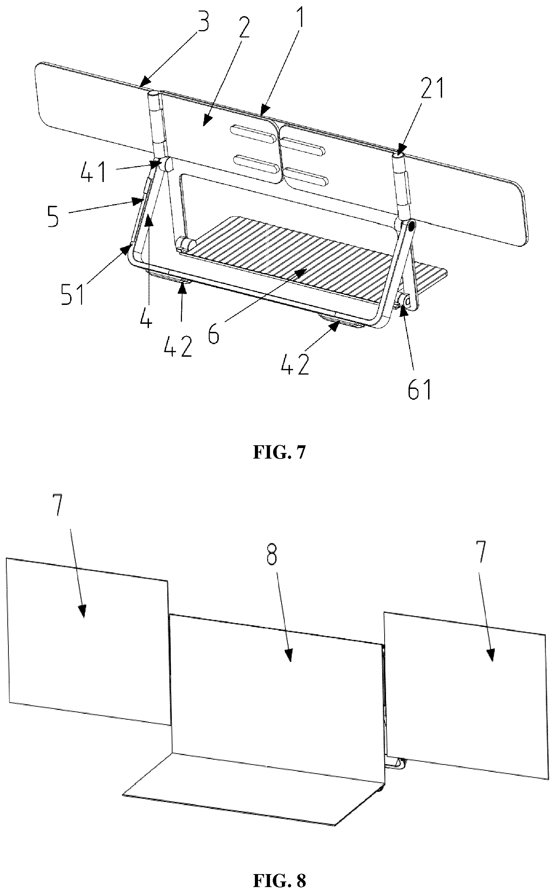

In the second usage scenario, as shown in FIGS. 2, 6-13, 16, and 19, after the mounting plate 3 is equipped with the expansion screen 7 and unfolded to a maximum angle relative to the auxiliary plate 2 (which is 180° in this embodiment), the orientation of the expansion screen 7 on the mounting plate 3 is the same as or similar to that of the first surface 14 of the base plate 1. In this configuration, the two expansion screens 7 are positioned on the left and right sides of the base plate 1, respectively. The first surface 14 of the base plate 1 can support an electronic device, thus meeting the requirement of having the two expansion screens 7 positioned on two opposite sides of the electronic device or supporting two expansion screens independently. Specifically, as illustrated in FIGS. 8-9 and 12-13, the electronic device in this embodiment is a laptop, effectively achieving a three-screen display effect in this usage scenario. In other usage scenarios, the mounting plate 3 can be rotated to other angles relative to the auxiliary plate 2, such as 90°, where the orientation of the expansion screen 7 is perpendicular to that of the first surface 14 of the base plate 1, enabling a multi-faceted screen display effect.

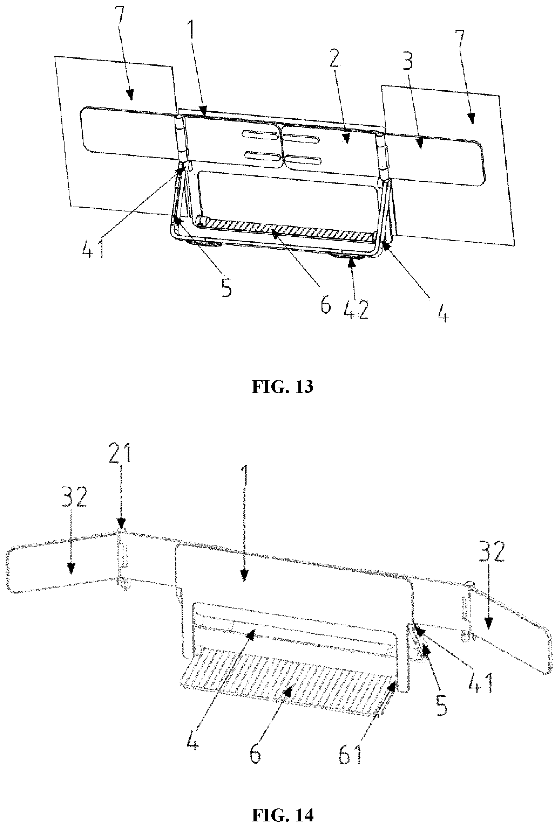

In other embodiments, as shown in FIG. 14, the maximum unfolded angle of the mounting plate 3 relative to the auxiliary plate 2 can be 190°, 200°, or 210°, etc. In this embodiment, the mounting plate 3 allows the expansion screen 7 to achieve a curved-screen-like display effect when used with a laptop.

In this embodiment, the mounting part is specifically the mounting plate 3. The mounting plate 3 and the auxiliary plate 2 are in a plate-like structure. However, it is not limited to the embodiments. Specifically, the expansion screen 7 is detachably mounted on the mounting plate 3. The direction from the first surface 14 of the base plate 1 towards the second surface 13 is defined as the first direction 17. When the mounting plate 3 and the auxiliary plate 2 are folded together (i.e., both are in the folded state), their projections along the first direction 17 overlap, meaning that the length and width of the mounting plate 3 are both less than or equal to those of the auxiliary plate 2.

It should be noted that the two auxiliary plates 2 can slide towards each other until their projections along the first direction 17 overlap with the projection of the base plate 1, at which point the auxiliary plates 2 are in the first folded state. Alternatively, only one auxiliary plate 2 can slide to the first folded state, while the other remains unfolded. Conversely, by sliding the two auxiliary plates 2 away from each other until an overlap area of the two auxiliary plates 2 with the base plate 1 is less than that in the first folded state, the auxiliary plates 2 are in the first unfolded state. In at least one embodiment, the two auxiliary plates 2 can slide to a maximum position where a distal end of the two auxiliary plates 2 reaches a maximum distance relative to the base plate 1. The two auxiliary plates 2 can slide to and be kept in any position between the first folded state to the maximum position.

It can be understood that, as previously described and illustrated in FIGS. 1-24, each expansion assembly 2a may include the auxiliary plate 2 and the mounting plate 3. The auxiliary plate 2 is movably connected to the base plate 1, allowing it to be switched between the first folded state and the first unfolded state relative to the base plate 1. The mounting plate 3 is movably connected to the auxiliary plate 2, enabling it to be switched between the second folded state and the second unfolded state relative to the auxiliary plate 2. The auxiliary plate 2 and the mounting plate 3 are rotatably connected, and they can be stacked together with the base plate 1 with the auxiliary plate 2 positioned between the mounting plate 3 and the base plate 1.

As shown in FIGS. 2 and 3, the support structure 1a includes a support frame 4 positioned at a lower part 16 of the base plate 1. The support frame 4 is U-shaped, while an upper part of the base plate 1 is rectangular and the lower part 16 of the base plate 1 is Π-shaped. When unfolded, the support frame 4 forms an angle with the base plate 1 and can cooperate with the lower part 16 to support the entire display stand horizontally on the placement surface. Specifically, unfolded support frame 4 can together with the base plate 1 forms a two-legged support on the placement surface. A tiled angle of the base plate 1 tilted can be adjusted by changing an unfolded angle of the support frame 4.

Preferably, the support structure 1a further includes a side plate 5 rotatably mounted on a side 43 of the support frame 4. A first rotation axis 53 of the side plate 5 is perpendicular to a second rotation axis 44 of the support frame 4. When unfolded, the side plate 5 can cooperate with the unfolded auxiliary plate 2 to support the display stand vertically on the placement surface. Specifically, to use the side plate 5, one must first unfold the support frame 4, then the auxiliary plate 2 (without unfolding the mounting plate 3), and finally the side plate 5. The side plate 5 and the auxiliary plate 2 then form a two-legged support on the placement surface. In this embodiment, the support frame 4 is further provided with a storage slot 52 configured to accommodate the side plate 5, which is shaped to fit the side plate 5.

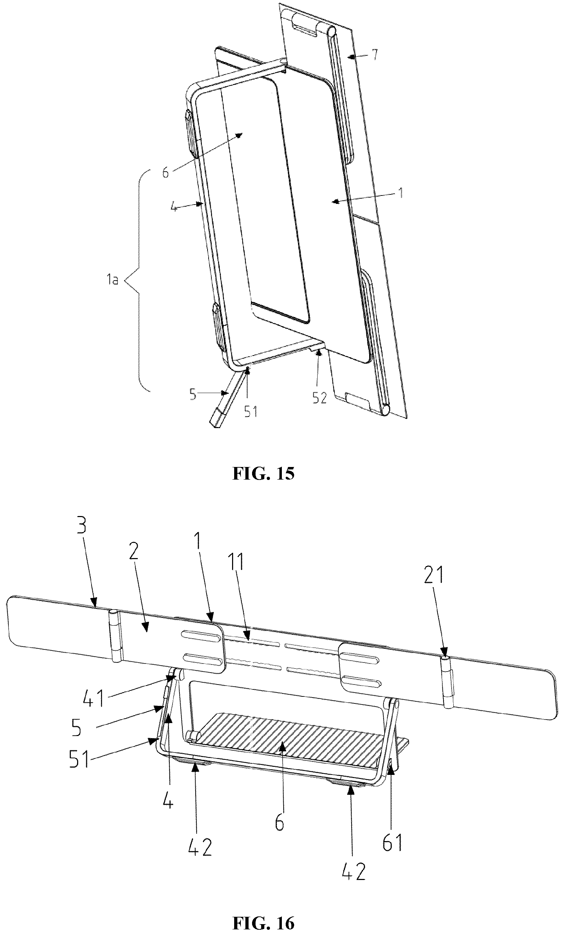

In a third usage scenario, as shown in FIGS. 3 and 15, the display stand is placed vertically relative to the first and second usage scenarios. In this third usage scenario, the mounting plate 3 is in the second folded state, but the auxiliary plate 2 is in the first unfolded state. Two expansion screens 7 on the mounting plate 3 are spliced vertically, achieving a vertical multi-screen display effect.

Preferably, the first surface 14 of the base plate 1 is configured to abut against the back of an electronic device. A bottom plate 6 is rotatably connected to the lower part 16 and forms an angle with the base plate 1 when unfolded. The unfolded bottom plate 6 is configured to support the bottom of the electronic device. In this embodiment, the surface of the bottom plate 6 may be provided with anti-slip patterns 67 to increase friction with the bottom of the electronic device and prevent it from slipping. A storage cavity 15 shaped to fit the bottom plate 6 is provided on the base plate 1, and the bottom plate 6 can be rotated into the storage cavity 15 for storage.

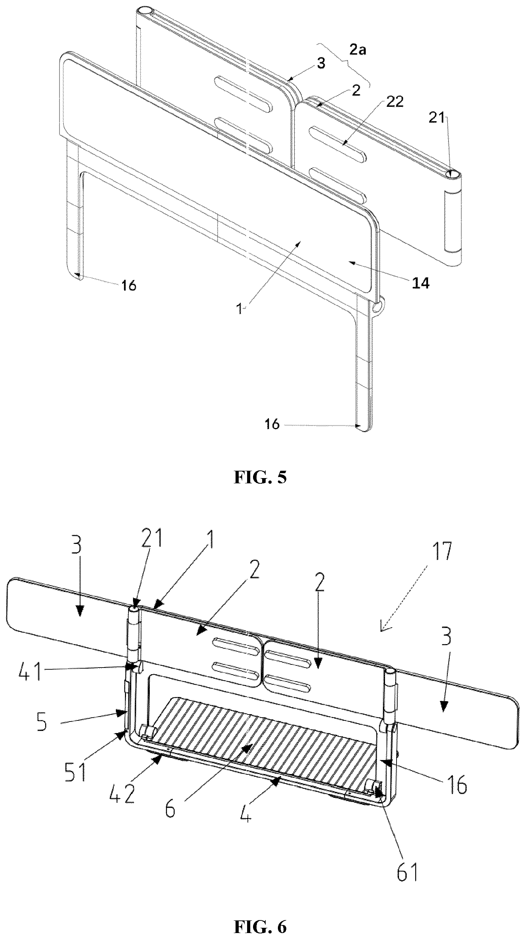

As shown in FIGS. 4 and 5, at least two sliding grooves 11 are provided on the second surface 13 of the base plate 1, and at least one slider 22 is provided on each of the two auxiliary plates 2. The sliders 22 of the two auxiliary plates 2 are respectively inserted into the at least two sliding grooves 11, enabling the auxiliary plates 2 to slide on the base plate 1. In this embodiment, there are four sliding grooves 11, and each auxiliary plate 2 is equipped with two sliders 22.

It should be noted that, as shown in FIG. 6, the auxiliary plate 2 and the mounting plate 3 are rotatably assembled via a first rotating shaft 21. The support frame 4 and the base bottom 16 are rotatably assembled via a second rotating shaft 41. The side plate 5 and the support frame 4 are rotatably assembled via a third rotating shaft 51. The base bottom 16 and the bottom plate 6 are rotatably assembled via a fourth rotating shaft 61. The mounting plate 3 is equipped with a magnetic attraction part therein to assemble the expansion screen 7. Specifically, the magnetic attraction part is a magnet positioned inside the mounting plate 3, and the expansion screen 7 is equipped with magnetic metal configured to be capable of being magnetically attracted to the magnet. In other embodiments, the mounting plate 3 may assemble the expansion screen 7 using clips or Velcro.

The above provides a detailed description of the display stand in the first embodiment of the present disclosure. In summary, the beneficial effects of the display stand in the first embodiment are as follows: The base plate 1 can be unfolded or folded relative to the support structure 1a, allowing the display stand to be folded or unfolded as needed. The support structure 1a is configured to support the display stand either horizontally or vertically on the placement surface, providing the advantage of being able to change the orientation and position of the expansion screen(s), thereby enhancing the user experience. Furthermore, when the support structure 1a is in the horizontal placement state, it unfolds to support the bottom of the device to be expanded or at least one electronic device. After the bottom plate 6 is unfolded, the base plate 1 abuts against the back of the device to be expanded or at least one electronic device, enabling the display stand to stably support the electronic device(s). The base plate 1 is further equipped with at least one expansion assembly 2a, which is configured to mount the at least one expansion screen 7. The position of the expansion screen 7 can be adjusted as the expansion assembly 2a moves relative to the base plate 1, thus meeting the needs of different users and/or different application scenarios. When the support structure 1a is in the vertical placement state, it is rotated by a preset angle relative to the horizontal placement state to support the base plate 1 and the expansion assembly(s) 2a. The base plate 1 and at least one expansion assembly 2a are configured to mount and support the at least one expansion screen 7, enabling the display stand to extend the position of the expansion screens in different orientations, further adapting to the needs of different users and improving the user experience.

However, in usage environments such as financial industry, design industry, and e-sports industry, where multi-window application processing or multi-screen synchronous display is required, it is common to see people using laptops with external expansion screens 7 due to the inconvenience caused by insufficient screen size. This is mainly achieved through the laptop's projection function to control the expansion screen 7, thereby duplicating or extending the display content of the laptop's built-in expansion screen 7 and providing additional display workspace for laptop users.

The display stand provided in the first embodiment mentioned above can support the laptop and secure the expansion screen 7, allowing the laptop to connect to the expansion screen 7 via a data cable. This, however, will occupy one or more interfaces of the laptop for connecting to the expansion screen 7. Since most laptops have a limited number of interfaces, connecting an expansion screen 7 further reduces available interfaces. If the laptop also needs to connect to external electronic devices such as a mouse, keyboard, speaker, or mobile hard drive, it may easily lead to an insufficient number of built-in interfaces on the laptop, significantly affecting the user's actual experience.

Based on the above, a second embodiment of the present disclosure provides a display stand with expansion capabilities. As shown in FIGS. 18-24, the display stand includes a base plate 1 and a bottom plate 6 hinged to the lower part 16 of the base plate 1. The bottom plate 6 can be unfolded or folded relative to the base plate 1. When the bottom plate 6 is in the folded state, it is stacked on the base plate 1, thereby reducing the space occupied by the entire stand and facilitating its portability. When the bottom plate 6 is in the unfolded state, it can support the bottom of the device to be expanded 8. The base plate 1 has a first surface 14 and a second surface 13, with the first surface 14 capable of supporting the back of the device to be expanded 8. Here, the device to be expanded 8 can be a tablet, laptop, mobile phone, or handheld game console, etc. Specifically, in this embodiment, the device to be expanded 8 is a laptop.

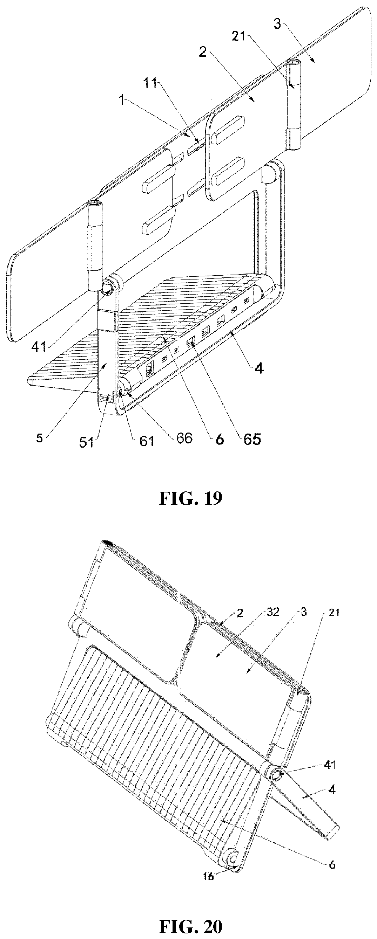

Preferably, as shown in FIGS. 19, 23, and 24, multiple expansion ports 65 are provided on the bottom plate 6. These expansion ports 65 are all coupled to a control circuit board 622 inside the bottom plate 6. Some of the expansion ports 65 can be coupled to the device to be expanded 8 and/or the expansion screen 7, while the others can be coupled to external electronic devices. This allows the device to be expanded 8 and/or the expansion screen 7 to indirectly couple to external electronic devices through the expansion ports 65, thereby expanding the functions of the device to be expanded 8 and/or the expansion screen 7, and enabling the bottom plate 6 a function similar to that of a docking station. Specifically, the external electronic devices can be fans, mobile hard drives, or portable power banks, etc. The multiple expansion ports 65 can include, but not limited to, at least one of a Type-C port, an HDMI port, and a Type-A port.

In other embodiments, a rechargeable battery coupled to the control circuit board 622 can be arranged in the bottom plate 6. This allows the expansion screen 7 and the device to be expanded 8 to be charged directly through the expansion ports 65. The rechargeable battery can also be connected to an external power source through the expansion ports 65 to supply power to the rechargeable battery.

Preferably, the base plate 1 is movably equipped with auxiliary plates 2. The number of the auxiliary plates 2 can be, but not limited to, one, two, three, etc. In this embodiment, there are two auxiliary plates 2. The auxiliary plates 2 can slide horizontally or vertically relative to the base plate 1. Specifically, the auxiliary plates 2 can slide horizontally relative to the base plate 1. A mounting plate 3 is rotatably connected to one side of each auxiliary plate 2, and the mounting plate 3 can support assembly of the expansion screen 7. Since the sliding distances of the two auxiliary plates 2 can be controlled independently, they can be adapted to accommodate and assemble two expansion screens 7 of different sizes side by side. It can be understood that the auxiliary plates 2 and the mounting plates 3 constitute the expansion assembly 2a described in the first embodiment, and will not be elaborated further here.

Specifically, as in the first embodiment, the auxiliary plate 2 and the mounting plate 3 are rotatably assembled via the first rotating shaft 21. The support frame 4 and the base plate 1 are rotatably assembled via the second rotating shaft 41. The side plate 5 is rotatably assembled with the support frame 4 via the third rotating shaft 51.

Preferably, a fourth rotating shaft 61 (equivalent to the fourth rotating shaft 61 in the first embodiment) is provided between the base plate 1 and the bottom plate 6. The expansion ports 65 are arranged on a side of the bottom plate 6 adjacent to the fourth rotating shaft 61. A storage cavity 15, shaped to fit the bottom plate 6, is provided on the base plate 1. When the bottom plate 6 is rotated into the storage cavity 15, the storage of the bottom plate 6 is completed. The fourth rotating shaft 61 is located on the side of the storage cavity 15 away from the auxiliary plates 2. A resisting block 66 is provided on the side of the bottom plate 6 adjacent to the fourth rotating shaft 61. The resisting block 66 can limit a rotation range of the bottom plate 6. When the bottom plate 6 is folded, its outer surface is flush with that of the base plate 1.

It should be noted that a longitudinal cross-section of the bottom plate 6 is wedge-shaped. When the bottom plate 6 is unfolded, a surface of the bottom plate 6 configured to support the bottom of the device to be expanded 8, is inclined. This allows the device to be expanded 8, particularly the keyboard part of a laptop, to be placed at an angle, improving typing efficiency and comfort. Anti-slip patterns 67 can be provided on the surface of the bottom plate 6 that supports the bottom of the device to be expanded 8. These anti-slip patterns 67 can prevent the laptop from slipping off the display stand.

Preferably, at least two sliding grooves 11 are provided on the side of the base plate 1 adjacent the mounting plate 3. At least one slider 22 is provided on each of the two auxiliary plates 2. The sliders 22 of the two auxiliary plates 2 are respectively inserted into the at least two sliding grooves 11, enabling the auxiliary plates 2 to slide on the base plate 1. The sliding grooves 11 extend along the width direction of the base plate 1, allowing the auxiliary plates 2 to slide leftwards and rightwards relative to the base plate 1. In this embodiment, there are four sliding grooves 11, and each auxiliary plate 2 is equipped with two sliders 22, but the number is not limited to the above.

It should be noted that the auxiliary plates 2 can be mounted on the second surface 13 of the base plate 1, while the mounting plate 3 is hinged to the side of the auxiliary plates 2 away from the base plate 1. In this case, the mounting plate 3 and the auxiliary plates 2 form a hinge structure. When the hinge structure is closed, the mounting plate 3 is in the second folded state; when the hinge structure is opened, the mounting plate 3 is in the second unfolded state. An attraction part 32 is provided on the side of the mounting plate 3 away from the auxiliary plates 2. The attraction part 32 is configured to attract the expansion screen 7, specifically the back of the expansion screen 7, thereby fixing and assembling the expansion screen 7 on the display stand. Whether the mounting plate 3 and the auxiliary plates 2 are in the folded state or the unfolded state, the mounting plate 3 can attract the expansion screen 7, allowing the display stand to have multiple usage states.

In the first usage state, as illustrated in FIG. 19, the mounting plate 3 and the auxiliary plate 2 are in the unfolded state. In this embodiment, the unfolding angle between the mounting plate 3 and the auxiliary plate 2 is 180°. The orientation of the expansion screen 7 on the attraction part 32 is the same as or similar to that of the first surface 14 of the base plate 1. At this circumstance, the two expansion screens 7 are located on the left and right sides of the base plate 1, respectively. Subsequently, placing the device to be expanded 8 on the bottom plate 6 and leaning it against the base plate 1 fulfills the requirement of having the two expansion screens 7 positioned on the left and right sides of the device to be expanded 8. In other usage scenarios, the mounting plate 3 can be rotated to other angles relative to the auxiliary plate 2, such as 90°. At this time, the orientation of the expansion screen 7 on the attraction part 32 is perpendicular to that of the base plate 1, achieving a multi-screen-like usage effect.

In other embodiments, the maximum unfolding angle between the mounting plate 3 and the auxiliary plate 2 can be 190°, 200°, or 210°, etc. In these embodiments, the mounting plate 3 enables the expansion screen 7 and the device to be expanded 8 to achieve a curved-screen-like usage effect.

In the second usage state, as illustrated in FIG. 20, when the mounting plate 3 and the auxiliary plate 2 are in the closed state (i.e., the folded state), the orientation of the expansion screen 7 on the attraction part 32 is the same as or similar to that of the second surface 13 of the base plate 1. At this circumstance, the display stand can realize the left-right splicing of the two expansion screens 7. The device to be expanded 8 can be placed on the bottom plate 6 or detached from the display stand 1.

Preferably, in the second usage state, a support frame 4 can be provided at the lower part 16 of the base plate. The support frame 4 is U-shaped. The upper part of the base plate 1 is a rectangular plate, and the lower part 16 of the base plate 1 is Π-shaped. After being unfolded, the support frame 4 forms an angle with the base plate 1 and can cooperate with the lower part 16 to support the display stand horizontally on a placement surface. Specifically, after being unfolded, the support frame 4 together with the base plate 1 forms a two-legged support on the placement surface. At this time, the base plate 1 is inclined, and an inclination angle of the base plate 1 relative to the placement surface varies along with the unfolding angle of the support frame 4.

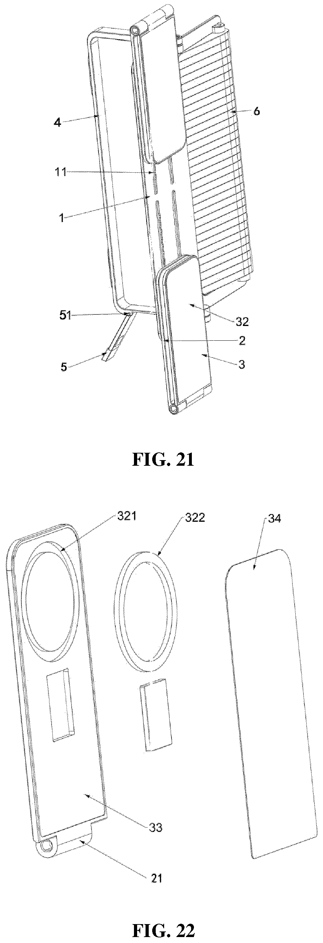

In the third usage state, as illustrated in FIG. 21, the display stand is placed vertically relative to the first and second usage scenarios. At this time, the mounting plate 3 is in the second folded state, but the auxiliary plate 2 is in the first unfolded state. The auxiliary plate 2 and the unfolded support frame 4 form a two-legged support on the placement surface. The two expansion screens 7 on the mounting plate 3 are spliced vertically, achieving a vertical dual-screen usage effect (please referring to FIG. 15 in the first embodiment).

It should be noted that a side plate 5 can be provided on the side 43 of the support frame 4. The first rotation axis 53 of the side plate 5 is perpendicular to the second rotation axis 44 of the support frame 4. After unfolding, the side plate 5 can cooperate with the unfolded auxiliary plate 2 to support the display stand vertically on the placement surface. The inclination angle of the display stand relative to the placement surface can be adjusted by regulating a rotation angle of the side plate 5 relative to the support frame 4. Specifically, when using the side plate 5, the support frame 4 needs to be unfolded first, followed by the auxiliary plate 2, without unfolding the mounting plate 3, and then the side plate 5 is unfolded. The side plate 5 and the auxiliary plate 2 form a two-legged support on the placement surface.

As shown in FIG. 22, the mounting plate 3 includes a plate body 33. The attraction part 32 is a magnetic block 322. A mounting groove 321 for embedding the magnetic block 322 is provided on the surface of the plate body 33 configured to mount the extension screen 7. A cover body 34 configured to cover the mounting groove 321 is provided on the plate body 33, allowing the magnetic block 322 to be assembled inside the mounting plate 3.

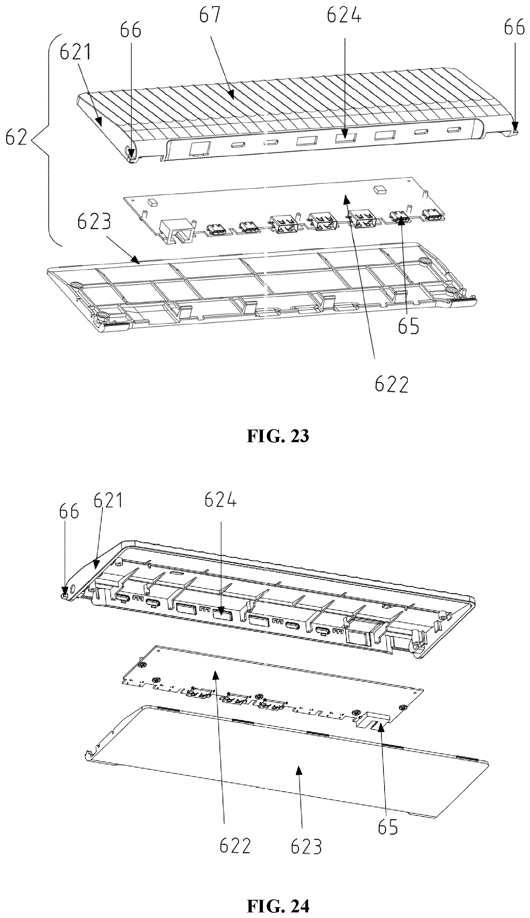

As shown in FIGS. 23 and 24, the bottom plate 6 can include a shell 62 and a circuit board 622. The shell 62 has at least one opening 624. The circuit board 622 is located inside the shell 62. The shell 62 includes an upper shell 621 and a lower shell 623. The resisting blocks 66 are provided on both sides of the upper shell 621 and located on the same side with the at least one opening 624. The anti-slip patterns 67 can be provided on the upper surface of the upper shell 621 to prevent the device to be expanded 8 from moving and achieve stable support. The at least one expansion port 65 is electrically connected to the circuit board 622 and corresponds to the at least one opening 624 for external devices (such as the device to be expanded 8 or other devices) to be electrically connected to the at least one expansion port 65.

The above-described embodiments merely illustrate several embodiments of the present disclosure, and the description thereof is relatively specific and detailed, but it should not be construed as limiting the scope of patent protection. It should be pointed out that, for ordinary skilled in the art, several modifications and improvements can be made without departing from the concept of the present disclosure, which all fall within the scope of protection of the present disclosure. Therefore, the protection scope of the present disclosure should be determined by appended claims.

## Claims

1. A display stand, comprising
a base plate (1); and
a support structure (1a) connected to the base plate (1) and configured to be switched between an unfolded state where the support structure (1a) is configured to horizontally or vertically support the display stand on a placement surface and a folded state where the support structure (1a) is folded onto the base plate (1);
wherein,
when the support structure (1a) is in the unfolded state and is in a horizontally placed state, the support structure is configured to support a bottom of a device to be expanded (8) and the base plate (1) is configured to abut against a back of the device to be expanded (8); at least one expansion assembly (2a) is movably connected to the base plate (1) and configured to mount at least one expansion screen (7);
the support stand being **characterised in that**,
when the support structure (1a) is in the unfolded state and is in a vertically placed state, the support structure (1a) is configured to rotate a preset angle relative to the horizontally placed state to support the base plate (1) and the at least one expansion assembly (2a), and the base plate (1) and the at least one expansion assembly (2a) are configured to mount and support the at least one expansion screen (7).

2. The display stand according to claim 1, wherein the at least one expansion assembly (2a) is slidably connected to the base plate (1) to allow the expansion assembly (2a) to extend a support length of the display stand along a preset direction.

3. The display stand according to claim 1, wherein the at least one expansion assembly comprises two expansion assemblies (2a) movably connected two opposite sides of the base plate (1) and configured to move in different directions respectively.

4. The display stand according to claim 1, wherein each of the at least one expansion assembly (2a) comprises a connector movably connected to the base plate (1) and a mounting part movably connected to the connector and configured to mount the at least one expansion screen (7), the connector is configured to horizontally or vertically adjust a position of the expansion assembly (2a) on the base plate (1) so as to adjust a horizontal or vertical distance between the at least one expansion screen (7) and the base plate (1).

5. The display stand according to claim 4, wherein the connector is an auxiliary plate (2) configured to moveably connected to the base plate (1) to allow the auxiliary plate (2) to be switched between a first folded state and a first unfolded state; the base plate (1) comprises a first surface (14) configured to abut against the device to be expanded (8) and a second surface (13) opposite to the first surface (14), a direction from the first surface (14) to the second surface (13) is defined as a first direction; when in the first folded state, projections of the auxiliary plate (2) and the base plate (1) in the first direction (17) at least partially overlap; when in the unfolded state, the projections of the auxiliary plate (2) and the base plate (1) in the first direction (17) are at least partially non-overlapping; and
the mounting part is a mounting plate (3) movably connected to the auxiliary plate (2) to allow the mounting plate (3) to be switched between a second folded state and a second unfolded state; when in the second folded state, projections of the mounting plate (3) and the auxiliary plate (2) in the first direction (17) at least partially overlap; when in the second unfolded state, the projections of the mounting plate (3) and the auxiliary plate (2) in the first direction (17) are at least partially non-overlapping.

6. The display stand according to claim 5, wherein the auxiliary plate (2) is slidably connected to the base plate (1), the second surface (13) is provided with at least one sliding groove (11), at least one slider (22) is arranged on the auxiliary plate (2) and configured to slide in the at least one sliding groove (11); the sliding groove (11) extends in a width direction of the base plate (1) to allow the auxiliary plate (2) slide along the width direction of the base plate (1).

7. The display stand according to claim 5, wherein the mounting plate (3) is pivotably connected to the auxiliary plate (2), the mounting plate (3), the auxiliary plate (2), and the base plate (1) are capable of being stacked together and the auxiliary plate (2) is located between the mounting plate (3) and the base plate (1);
wherein a side of the mounting plate (3) is pivotably connected to the auxiliary plate (2) to form a hinge structure, when the hinge structure is closed, the mounting plate is in the second folded state; when the hinge structure is opened, the mounting plate (3) is in the second unfolded state.

8. The display stand according to claim 5, wherein the mounting plate (3) is provided with an attraction part (32) configured to attract the at least one expansion screen (7);
when the mounting plate is in the second folded state, orientation of the at least one expansion screen (7) attracted by the attraction part (32) is the same as or similar to that of the second surface; and
when the mounting plate is in the second unfolded state, the orientation of the at least one expansion screen (7) attracted by the attraction part (32) is the same as or similar to that of the first surface (14).

9. The display stand according to claim 8, wherein the mounting plate (3) comprises a plate body (33), the attraction part (32) is a magnetic block (322), the plate body (33) defines a mounting groove (321) configured to receive the magnetic block (322), and a cover body (34) configured to cover the mounting groove (321) is provided on the plate body (33).

10. The display stand according to claim 1, wherein the support structure (1a) comprises a bottom plate (6) and a support frame (4) pivotably connected to the base plate (1), the support frame (4) is configured to be unfolded to a preset angle relative to the base plate (1) and configured to contact the placement surface together with the base plate (1) after being unfolded so as to horizontally support the display stand on the placement surface.

11. The display stand according to claim 10, wherein the support structure (1a) comprises a side plate (5) arranged on a side (43) of the support frame (4), a first rotation axis (53) of the side plate is perpendicular to a second rotation axis (44) of the support frame (4), the side plate (5) is configured to contact the placement surface together with the expansion assembly (2a) after being unfolded so as to vertically support the display stand on the placement surface after being unfolded.

12. The display stand according to claim 11, wherein the support frame (4) is provided with a storage slot (52) configured to accommodate the side plate and shaped to fit the side plate (5);
wherein a rotating shaft (61) is connected between the base plate (1) and the bottom plate (6); a storage cavity (15) configured to accommodate the bottom plate (6) is provided on the base plate (1), and the rotating shaft (61) is arranged on a side of the storage cavity (15) away from the expansion assembly (2a);
wherein a resisting block (66) is provided on a side of the bottom plate adjacent to the rotating shaft (61) configured to limit a rotation range of the bottom plate (6) so as to have the bottom plate (6) flush with the base plate (1) after being folded.

13. The display stand according to claim 10, wherein a longitudinal cross-section of the bottom plate (6) is wedge-shaped, and after the bottom plate (6) is unfolded, a surface of the bottom configured to support the device (8) to be expanded is sloped.

14. The display stand according to claim 10, wherein the bottom plate (6) of the support structure (1a) comprises a shell (62), a circuit board (622), and at least one expansion port (65), the shell (62) defines at least one opening (624), the circuit board (622) is arranged in the shell (62), the at least one expansion port (65) is electrically connected to the circuit board (622) and correspond to the at least one opening (624) to allow external electronic devices to be connected to the at least one expansion port (65) through the at least one opening (624).

15. The display stand according to claim 14, wherein the at least one expansion port (65) comprises multiple expansion ports (65), at least one part of the multiple expansion ports (65) is configured to be coupled to the device to be expanded (8) and/or the expansion screen (7); and other part of the multiple expansion ports (65) is configured to be coupled to the external electronic devices;
wherein the multiple expansion ports (65) comprise at least one of a Type-C port, a HDMI port, and a Type-A port.

## Patentansprüche

1. Ein Schauständer, umfassend:
eine Grundplatte (1); und
eine Stützstruktur (1a), die mit der Grundplatte (1) verbunden ist und so konfiguriert ist, dass sie zwischen einem aufgeklappten Zustand, in dem die Stützstruktur (1a) so konfiguriert ist, dass sie den Schauständer horizontal oder vertikal auf einer Aufstellfläche abstützt, und einem zusammengeklappten Zustand, in dem die Stützstruktur (1a) auf die Grundplatte (1) geklappt ist, umgeschaltet werden kann;
wobei,
wenn sich die Stützstruktur (1a) in dem aufgeklappten Zustand befindet und in einem horizontal platzierten Zustand ist, die Stützstruktur so konfiguriert ist, dass sie eine Unterseite einer zu erweiternden Vorrichtung (8) abstützt, und die Grundplatte (1) so konfiguriert ist, dass sie an einer Rückseite der zu erweiternden Vorrichtung (8) anliegt; mindestens eine Erweiterungsbaugruppe (2a) beweglich mit der Grundplatte (1) verbunden und so konfiguriert ist, dass sie mindestens einen Erweiterungsbildschirm (7) anbringt;
wobei der Schauständer **dadurch gekennzeichnet ist, dass**
wenn sich die Stützstruktur (1a) in dem aufgeklappten Zustand befindet und in einem vertikal platzierten Zustand ist, die Stützstruktur (1a) so konfiguriert ist, dass sie sich um einen voreingestellten Winkel relativ zu dem horizontal platzierten Zustand dreht, um die Grundplatte (1) und die mindestens eine Erweiterungsbaugruppe (2a) abzustützen, und die Grundplatte (1) und die mindestens eine Erweiterungsbaugruppe (2a) so konfiguriert sind, dass sie den mindestens einen Erweiterungsbildschirm (7) anbringen und abstützen.

2. Der Schauständer nach Anspruch **1,** wobei die mindestens eine Erweiterungsbaugruppe (2a) verschiebbar mit der Grundplatte (1) verbunden ist, um zu ermöglichen, dass die Erweiterungsbaugruppe (2a) eine Stützlänge des Schauständers entlang einer voreingestellten Richtung verlängert.

3. Der Schauständer nach Anspruch **1,** wobei die mindestens eine Erweiterungsbaugruppe zwei Erweiterungsbaugruppen (2a) umfasst, die beweglich mit zwei gegenüberliegenden Seiten der Grundplatte (1) verbunden sind und so konfiguriert sind, dass sie sich jeweils in unterschiedliche Richtungen bewegen.

4. Der Schauständer nach Anspruch 1, wobei jede der mindestens einen Erweiterungsbaugruppe (2a) ein Verbindungsstück umfasst, das beweglich mit der Grundplatte (1) verbunden ist, sowie ein Befestigungsteil, das beweglich mit dem Verbindungsstück verbunden und so konfiguriert ist, dass es den mindestens einen Erweiterungsbildschirm (7) anbringt, wobei das Verbindungsstück so konfiguriert ist, dass es eine Position der Erweiterungsbaugruppe (2a) auf der Grundplatte (1) horizontal oder vertikal einstellt, um so einen horizontalen oder vertikalen Abstand zwischen dem mindestens einen Erweiterungsbildschirm (7) und der Grundplatte (1) einzustellen.

5. Der Schauständer nach Anspruch 4, wobei das Verbindungsstück eine Hilfsplatte (2) ist, die so konfiguriert ist, dass sie beweglich mit der Grundplatte (1) verbunden ist, um zu ermöglichen, dass die Hilfsplatte (2) zwischen einem ersten zusammengeklappten Zustand und einem ersten aufgeklappten Zustand umgeschaltet wird; wobei die Grundplatte (1) eine erste Oberfläche (14) umfasst, die so konfiguriert ist, dass sie an der zu erweiternden Vorrichtung (8) anliegt, und eine der ersten Oberfläche (14) gegenüberliegende zweite Oberfläche (13) umfasst, wobei eine Richtung von der ersten Oberfläche (14) zu der zweiten Oberfläche (13) als eine erste Richtung definiert ist; wobei in dem ersten zusammengeklappten Zustand Projektionen der Hilfsplatte (2) und der Grundplatte (1) in der ersten Richtung (17) zumindest teilweise überlappen; wobei in dem aufgeklappten Zustand die Projektionen der Hilfsplatte (2) und der Grundplatte (1) in der ersten Richtung (17) zumindest teilweise nicht überlappen; und das Befestigungsteil eine Montageplatte (3) ist, die beweglich mit der Hilfsplatte (2) verbunden ist, um zu ermöglichen, dass die Montageplatte (3) zwischen einem zweiten zusammengeklappten Zustand und einem zweiten aufgeklappten Zustand umgeschaltet wird; wobei in dem zweiten zusammengeklappten Zustand Projektionen der Montageplatte (3) und der Hilfsplatte (2) in der ersten Richtung (17) zumindest teilweise überlappen; wobei in dem zweiten aufgeklappten Zustand die Projektionen der Montageplatte (3) und der Hilfsplatte (2) in der ersten Richtung (17) zumindest teilweise nicht überlappen.

6. Der Schauständer nach Anspruch 5, wobei die Hilfsplatte (2) verschiebbar mit der Grundplatte (1) verbunden ist, die zweite Oberfläche (13) mit mindestens einer Gleitnut (11) versehen ist, mindestens ein Schieber (22) auf der Hilfsplatte (2) angeordnet und so konfiguriert ist, dass er in der mindestens einen Gleitnut (11) gleitet; wobei sich die Gleitnut (11) in einer Breitenrichtung der Grundplatte (1) erstreckt, um zu ermöglichen, dass die Hilfsplatte (2) entlang der Breitenrichtung der Grundplatte (1) gleitet.

7. Der Schauständer nach Anspruch 5, wobei die Montageplatte (3) schwenkbar mit der Hilfsplatte (2) verbunden ist, die Montageplatte (3), die Hilfsplatte (2) und die Grundplatte (1) übereinander gestapelt werden können und die Hilfsplatte (2) zwischen der Montageplatte (3) und der Grundplatte (1) angeordnet ist;
wobei eine Seite der Montageplatte (3) schwenkbar mit der Hilfsplatte (2) verbunden ist, um eine Scharnierstruktur zu bilden, wobei sich die Montageplatte in dem zweiten zusammengeklappten Zustand befindet, wenn die Scharnierstruktur geschlossen ist; wobei sich die Montageplatte (3) in dem zweiten aufgeklappten Zustand befindet, wenn die Scharnierstruktur geöffnet ist.

8. Der Schauständer nach Anspruch 5, wobei die Montageplatte (3) mit einem Anziehungsteil (32) versehen ist, das so konfiguriert ist, dass es den mindestens einen Erweiterungsbildschirm (7) anzieht;
wobei, wenn sich die Montageplatte in dem zweiten zusammengeklappten Zustand befindet, die Ausrichtung des mindestens einen durch das Anziehungsteil (32) angezogenen Erweiterungsbildschirms (7) gleich oder ähnlich derjenigen der zweiten Oberfläche ist; und
wenn sich die Montageplatte in dem zweiten aufgeklappten Zustand befindet, die Ausrichtung des mindestens einen durch das Anziehungsteil (32) angezogenen Erweiterungsbildschirms (7) gleich oder ähnlich derjenigen der ersten Oberfläche (14) ist.

9. Der Schauständer nach Anspruch 8, wobei die Montageplatte (3) einen Plattenkörper (33) umfasst, das Anziehungsteil (32) ein Magnetblock (322) ist, der Plattenkörper (33) eine Montagenut (321) definiert, die so konfiguriert ist, dass sie den Magnetblock (322) aufnimmt, und ein Abdeckkörper (34), der so konfiguriert ist, dass er die Montagenut (321) abdeckt, auf dem Plattenkörper (33) vorgesehen ist.

10. Der Schauständer nach Anspruch **1,** wobei die Stützstruktur (1a) eine Bodenplatte (6) und einen Stützrahmen (4) umfasst, der schwenkbar mit der Grundplatte (1) verbunden ist, wobei der Stützrahmen (4) so konfiguriert ist, dass er bis zu einem voreingestellten Winkel relativ zu der Grundplatte (1) aufgeklappt wird, und so konfiguriert ist, dass er nach dem Aufklappen zusammen mit der Grundplatte (1) die Aufstellfläche berührt, um so den Schauständer horizontal auf der Aufstellfläche abzustützen.

11. Der Schauständer nach Anspruch 10, wobei die Stützstruktur (1a) eine Seitenplatte (5) umfasst, die an einer Seite (43) des Stützrahmens (4) angeordnet ist, wobei eine erste Drehachse (53) der Seitenplatte senkrecht zu einer zweiten Drehachse (44) des Stützrahmens (4) verläuft, wobei die Seitenplatte (5) so konfiguriert ist, dass sie nach dem Aufklappen zusammen mit der Erweiterungsbaugruppe (2a) die Aufstellfläche berührt, um so den Schauständer nach dem Aufklappen vertikal auf der Aufstellfläche abzustützen.

12. Der Schauständer nach Anspruch 11, wobei der Stützrahmen (4) mit einem Aufbewahrungsschlitz (52) versehen ist, der so konfiguriert ist, dass er die Seitenplatte aufnimmt, und so geformt ist, dass er an die Seitenplatte (5) anpassbar ist;
wobei eine Drehwelle (61) zwischen der Grundplatte (1) und der Bodenplatte (6) verbunden ist; wobei ein Aufbewahrungshohlraum (15), der so konfiguriert ist, dass er die Bodenplatte (6) aufnimmt, auf der Grundplatte (1) vorgesehen ist, und die Drehwelle (61) auf einer Seite des Aufbewahrungshohlraums (15) abgewandt von der Erweiterungsbaugruppe (2a) angeordnet ist;
wobei ein Widerstandsblock (66) auf einer Seite der Bodenplatte angrenzend an die Drehwelle (61) vorgesehen ist, der so konfiguriert ist, dass er einen Drehbereich der Bodenplatte (6) begrenzt, um so die Bodenplatte (6) nach dem Zusammenklappen bündig mit der Grundplatte (1) zu haben.

13. Der Schauständer nach Anspruch 10, wobei ein Längsquerschnitt der Bodenplatte (6) keilförmig ist und, nachdem die Bodenplatte (6) aufgeklappt ist, eine Oberfläche der Unterseite, die so konfiguriert ist, dass sie die zu erweiternde Vorrichtung (8) abstützt, geneigt ist.

14. Der Schauständer nach Anspruch 10, wobei die Bodenplatte (6) der Stützstruktur (1a) ein Gehäuse (62), eine Leiterplatte (622) und mindestens einen Erweiterungsanschluss (65) umfasst, das Gehäuse (62) mindestens eine Öffnung (624) definiert, die Leiterplatte (622) in dem Gehäuse (62) angeordnet ist, der mindestens eine Erweiterungsanschluss (65) elektrisch mit der Leiterplatte (622) verbunden ist und der mindestens einen Öffnung (624) entspricht, um zu ermöglichen, dass externe elektronische Vorrichtungen durch die mindestens eine Öffnung (624) mit dem mindestens einen Erweiterungsanschluss (65) verbunden werden.

15. Der Schauständer nach Anspruch 14, wobei der mindestens eine Erweiterungsanschluss (65) mehrere Erweiterungsanschlüsse (65) umfasst, wobei mindestens ein Teil der mehreren Erweiterungsanschlüsse (65) so konfiguriert ist, dass er mit der zu erweiternden Vorrichtung (8) und/oder dem Erweiterungsbildschirm (7) gekoppelt wird; und ein anderer Teil der mehreren Erweiterungsanschlüsse (65) so konfiguriert ist, dass er mit den externen elektronischen Vorrichtungen gekoppelt wird;
wobei die mehreren Erweiterungsanschlüsse (65) mindestens einen von einem Typ-C-Anschluss, einem HDMI-Anschluss und einem Typ-A-Anschluss umfassen.

## Revendications

1. Un présentoir, comprenant:
une plaque de base (1); et
une structure de support (1a) reliée à la plaque de base (1) et configurée pour être commutée entre un état déplié dans lequel la structure de support (1a) est configurée pour supporter horizontalement ou verticalement le présentoir sur une surface de placement et un état plié dans lequel la structure de support (1a) est repliée sur la plaque de base (1);
dans lequel,
lorsque la structure de support (1a) est dans l'état déplié et dans un état placé horizontalement, la structure de support est configurée pour supporter un bas d'un dispositif à étendre (8) et la plaque de base (1) est configurée pour s'appuyer contre un dos du dispositif à étendre (8); au moins un ensemble d'extension (2a) est relié de manière mobile à la plaque de base (1) et configuré pour monter au moins un écran d'extension (7);
le présentoir étant **caractérisé en ce que**,
lorsque la structure de support (1a) est dans l'état déplié et dans un état placé verticalement, la structure de support (1a) est configurée pour tourner d'un angle prédéfini par rapport à l'état placé horizontalement pour supporter la plaque de base (1) et l'au moins un ensemble d'extension (2a), et la plaque de base (1) et l'au moins un ensemble d'extension (2a) sont configurés pour monter et supporter l'au moins un écran d'extension (7).

2. Le présentoir selon la revendication **1,** dans lequel l'au moins un ensemble d'extension (2a) est relié de manière coulissante à la plaque de base (1) pour permettre à l'ensemble d'extension (2a) d'étendre une longueur de support du présentoir le long d'une direction prédéfinie.

3. Le présentoir selon la revendication **1,** dans lequel l'au moins un ensemble d'extension comprend deux ensembles d'extension (2a) reliés de manière mobile à deux côtés opposés de la plaque de base (1) et configurés pour se déplacer dans des directions différentes respectivement.

4. Le présentoir selon la revendication **1,** dans lequel chacun de l'au moins un ensemble d'extension (2a) comprend un connecteur relié de manière mobile à la plaque de base (1) et une partie de montage reliée de manière mobile au connecteur et configurée pour monter l'au moins un écran d'extension (7), le connecteur est configuré pour ajuster horizontalement ou verticalement une position de l'ensemble d'extension (2a) sur la plaque de base (1) de manière à ajuster une distance horizontale ou verticale entre l'au moins un écran d'extension (7) et la plaque de base (1).

5. Le présentoir selon la revendication 4, dans lequel le connecteur est une plaque auxiliaire (2) configurée pour être reliée de manière mobile à la plaque de base (1) pour permettre à la plaque auxiliaire (2) d'être commutée entre un premier état plié et un premier état déplié; la plaque de base (1) comprend une première surface (14) configurée pour s'appuyer contre le dispositif à étendre (8) et une seconde surface (13) opposée à la première surface (14), une direction allant de la première surface (14) vers la seconde surface (13) est définie comme une première direction; lorsqu'elle est dans le premier état plié, les projections de la plaque auxiliaire (2) et de la plaque de base (1) dans la première direction (17) se chevauchent au moins partiellement; lorsqu'elle est dans l'état déplié, les projections de la plaque auxiliaire (2) et de la plaque de base (1) dans la première direction (17) sont au moins partiellement non chevauchantes; et
la partie de montage est une plaque de montage (3) reliée de manière mobile à la plaque auxiliaire (2) pour permettre à la plaque de montage (3) d'être commutée entre un second état plié et un second état déplié; lorsqu'elle est dans le second état plié, les projections de la plaque de montage (3) et de la plaque auxiliaire (2) dans la première direction (17) se chevauchent au moins partiellement; lorsqu'elle est dans le second état déplié, les projections de la plaque de montage (3) et de la plaque auxiliaire (2) dans la première direction (17) sont au moins partiellement non chevauchantes.

6. Le présentoir selon la revendication 5, dans lequel la plaque auxiliaire (2) est reliée de manière coulissante à la plaque de base (1), la seconde surface (13) est pourvue d'au moins une rainure de coulissement (11), au moins un curseur (22) est agencé sur la plaque auxiliaire (2) et configuré pour coulisser dans l'au moins une rainure de coulissement (11); la rainure de coulissement (11) s'étend dans la direction de la largeur de la plaque de base (1) pour permettre à la plaque auxiliaire (2) de coulisser le long de la direction de la largeur de la plaque de base (1).

7. Le présentoir selon la revendication 5, dans lequel la plaque de montage (3) est reliée de manière pivotante à la plaque auxiliaire (2), la plaque de montage (3), la plaque auxiliaire (2) et la plaque de base (1) sont capables d'être empilées ensemble et la plaque auxiliaire (2) est située entre la plaque de montage (3) et la plaque de base (1);
dans lequel un côté de la plaque de montage (3) est relié de manière pivotante à la plaque auxiliaire (2) pour former une structure de charnière, lorsque la structure de charnière est fermée, la plaque de montage est dans le second état plié; lorsque la structure de charnière est ouverte, la plaque de montage (3) est dans le second état déplié.

8. Le présentoir selon la revendication 5, dans lequel la plaque de montage (3) est pourvue d'une partie d'attraction (32) configurée pour attirer l'au moins un écran d'extension (7);
lorsque la plaque de montage est dans le second état plié, l'orientation de l'au moins un écran d'extension (7) attiré par la partie d'attraction (32) est identique ou similaire à celle de la seconde surface; et
lorsque la plaque de montage est dans le second état déplié, l'orientation de l'au moins un écran d'extension (7) attiré par la partie d'attraction (32) est identique ou similaire à celle de la première surface (14).

9. Le présentoir selon la revendication 8, dans lequel la plaque de montage (3) comprend un corps de plaque (33), la partie d'attraction (32) est un bloc magnétique (322), le corps de plaque (33) définit une rainure de montage (321) configurée pour recevoir le bloc magnétique (322), et un corps de couvercle (34) configuré pour recouvrir la rainure de montage (321) est prévu sur le corps de plaque (33).

10. Le présentoir selon la revendication **1,** dans lequel la structure de support (1a) comprend une plaque inférieure (6) et un cadre de support (4) relié de manière pivotante à la plaque de base (1), le cadre de support (4) est configuré pour être déplié à un angle prédéfini par rapport à la plaque de base (1) et configuré pour entrer en contact avec la surface de placement conjointement avec la plaque de base (1) après avoir été déplié de manière à supporter horizontalement le présentoir sur la surface de placement.

11. Le présentoir selon la revendication 10, dans lequel la structure de support (1a) comprend une plaque latérale (5) agencée sur un côté (43) du cadre de support (4), un premier axe de rotation (53) de la plaque latérale est perpendiculaire à un second axe de rotation (44) du cadre de support (4), la plaque latérale (5) est configurée pour entrer en contact avec la surface de placement conjointement avec l'ensemble d'extension (2a) après avoir été dépliée de manière à supporter verticalement le présentoir sur la surface de placement après avoir été dépliée.

12. Le présentoir selon la revendication **11,** dans lequel le cadre de support (4) est pourvu d'une fente de rangement (52) configurée pour loger la plaque latérale et formée pour s'adapter à la plaque latérale (5);
dans lequel un arbre rotatif (61) est relié entre la plaque de base (1) et la plaque inférieure (6); une cavité de rangement (15) configurée pour loger la plaque inférieure (6) est prévue sur la plaque de base (1), et l'arbre rotatif (61) est agencé sur un côté de la cavité de rangement (15) à l'opposé de l'ensemble d'extension (2a);
dans lequel un bloc de résistance (66) est prévu sur un côté de la plaque inférieure adjacent à l'arbre rotatif (61) configuré pour limiter une plage de rotation de la plaque inférieure (6) de manière à ce que la plaque inférieure (6) soit au même niveau que la plaque de base (1) après avoir été pliée.

13. Le présentoir selon la revendication 10, dans lequel une section transversale longitudinale de la plaque inférieure (6) est en forme de coin, et après que la plaque inférieure (6) est dépliée, une surface du bas configurée pour supporter le dispositif (8) à étendre est inclinée.

14. Le présentoir selon la revendication 10, dans lequel la plaque inférieure (6) de la structure de support (1a) comprend une coque (62), une carte de circuit imprimé (622) et au moins un port d'extension (65), la coque (62) définit au moins une ouverture (624), la carte de circuit imprimé (622) est agencée dans la coque (62), l'au moins un port d'extension (65) est relié électriquement à la carte de circuit imprimé (622) et correspond à l'au moins une ouverture (624) pour permettre à des dispositifs électroniques externes d'être connectés à l'au moins un port d'extension (65) à travers l'au moins une ouverture (624).

15. Le présentoir selon la revendication **14,** dans lequel l'au moins un port d'extension (65) comprend de multiples ports d'extension (65), au moins une partie des multiples ports d'extension (65) est configurée pour être couplée au dispositif à étendre (8) et/ou à l'écran d'extension (7); et une autre partie des multiples ports d'extension (65) est configurée pour être couplée aux dispositifs électroniques externes;
dans lequel les multiples ports d'extension (65) comprennent au moins un parmi un port de Type-C, un port **HDMI** et un port de Type-A.
